# EUROPÄISCHE PATENTSCHRIFT

(11) **EP 2 516 806 B1**
(45) Veröffentlichungstag und Bekanntmachung des Hinweises auf die Patenterteilung: **09.10.2013**
(21) Anmeldenummer: 10776964.8
(22) Anmeldetag: 25.10.2010
(51) Int. Cl.: F01D 1/04, F01D 9/02, F01D 17/14, F02C 7/042

(54) **LAVALDÜSE**
LAVAL NOZZLE
TUYÈRE DE LAVAL

(30) Priorität: 22.12.2009 DE 102009055180
(43) Veröffentlichungstag der Anmeldung: 31.10.2012
(73) Patentinhaber: Robert Bosch GmbH, 70442 Stuttgart (DE)
(72) Erfinder: KRINN, Ilona, 70567 Moehringen (DE); STEGMAIER, Juergen, 71638 Ludwigsburg (DE); HASEMANN, Heinrich, 31515 Wunstorf (DE); SCHMITT, Manfred, 64646 Heppenheim (DE); BANZHAF, Bernd, 70563 Stuttgart (DE); GLASER, Patrick, 70197 Stuttgart (DE)
(86) Internationale Anmeldenummer: PCT/EP2010/066080
(87) Internationale Veröffentlichungsnummer: WO 2011/085835

(56) Entgegenhaltungen:
- CH-A- 348 576
- DE-A1- 3 413 304
- GB-A- 191 421 322
- US-A- 2 942 845
- US-A- 3 804 335

## Beschreibung

Die Erfindung geht aus von einer Lavaldüse mit einem Strömungskanal, der einen konvergent-divergent verlaufenden Strömungsquerschnittsverlauf aufweist.

Derartige Lavaldüsen werden beispielsweise dazu verwendet, die Enthalpie eines durch die Lavaldüse strömenden Arbeitsmediums in kinetische Energie zu überführen, d.h. das strömende Arbeitsmedium auf eine möglichst hohe Geschwindigkeit zu beschleunigen. Das der Lavaldüse mit Unterschallgeschwindigkeit zugeführte Arbeitsmedium wird dabei durch den konvergenten Strömungsquerschnitt im Düseneinlasses der Lavaldüse zunächst beschleunigt und erreicht dabei idealerweise im Bereich des kritischen, d.h. des geringsten, Strömungsquerschnitts des Strömungskanals seine spezifische Schallgeschwindigkeit, um im Bereich eines stromabwärts angeordneten Düsenauslasses, der einen divergenten Strömungsquerschnitt aufweist, auf Überschallgeschwindigkeit weiter beschleunigt zu werden. Die kinetische Energie des solchermaßen beschleunigten Arbeitsmediums kann nachfolgend beispielsweise an Turbinenschaufeln einer Axialturbine geleitet und von dieser in Rotationsenergie umgewandelt werden.

Die am Markt verfügbaren Lavaldüsen weisen jedoch einen kritischen Strömungsquerschnitt bzw. Strömungsquerschnittsverlauf des Strömungskanals auf, der konstruktiv auf einen bestimmten Massenstrom des zugeführten Arbeitsmediums ausgelegt ist. Bei einem festen engsten Strömungsquerschnitt kann in der Lavaldüse bei konstantem Druck vor der Lavaldüse genau ein Massenstrom durchgesetzt werden. Eine Veränderung des Massenstroms geht daher mit einem Druckabfall oder einem Druckanstieg vor der Lavaldüse einher. Dies ist nicht erwünscht.

Eine Lavaldüse nach dem Stand der Technik ist aus dem Dokument US 2942845 bekannt.

Aufgabe der Erfindung ist daher, eine gattungsgemäße Lavaldüse derart weiterzubilden, dass diese auch bei unterschiedlichen Massenströmen eines Arbeitsmediums effizient betrieben werden kann.

Aufgabe der Erfindung ist ferner, eine Lavaldüsenanordnung sowie eine Axialturbine mit einer Lavaldüse bzw. mit einer solchen Lavaldüsenanordnung anzugeben, die bei unterschiedlichen Massenströmen eines Arbeitsmediums effizient betrieben werden können.

### Vorteile der Erfindung

Die die Lavaldüse betreffende Aufgabe wird erfindungsgemäß gelöst durch eine Lavaldüse mit den im Anspruch 1 angegebenen Merkmalen. Die die Lavaldüsenanordnung betreffende Aufgabe wird erfindungsgemäß gelöst durch eine Düsenanordnung mit den in Anspruch 7 und die die Axialturbine betreffende Aufgabe durch eine Axialturbine mit den in Anspruch 8 angegebenen Merkmalen.

Erfindungsgemäß weist der Strömungskanal der Lavaldüse einander gegenüberliegende erste Strömungskanalwände auf, die von zwei zueinander fest beabstandet angeordneten Düsenkörpern gebildet sind, wobei zwischen den Düsenkörpern zwei einander gegenüberliegend angeordnete zweite Strömungskanalwände angeordnet sind, die zur Verstellung des Strömungsquerschnitts des Strömungskanals relativ zueinander aufeinander zu bzw. voneinander weg bewegbar sind. Dadurch kann der Strömungsquerschnitt der Lavaldüse, insbesondere im Bereich des engsten Strömungsquerschnitts, auf unterschiedliche Massenströme eines Arbeitsmediums, wie diese beispielsweise bei der Abwärmenutzung einer Verbrennungskraftmaschine im Kraftfahrzeugbereich gegeben sind, ausgerichtet werden. Das durch die Lavaldüse hindurchgeführte Arbeitsmedium kann damit weiterhin im Bereich des kritischen (geringsten) Strömungsquerschnitts des Strömungskanals seine spezifische Schallgeschwindigkeit (1 Mach) erreichen und somit stromabwärts des kritischen (geringsten) Strömungsquerschnitts der Lavaldüse auf Überschallgeschwindigkeit beschleunigt werden, ohne dass sich der Druck des Arbeitsmediums vor der Lavaldüse ändert. Insgesamt wird dadurch die nutzbare kinetische Energie für unterschiedliche Massenströme des Arbeitsmediums optimiert.

Nach einer bevorzugten Weiterbildung der Erfindung sind die beiden Düsenkörper zylindrisch, vorzugsweise mit Ring- oder Hülsenform, ausgebildet (Zylinderkörper) und koaxial ineinander angeordnet. Dadurch wird einerseits ein einfacher und robuster Aufbau der Lavaldüse erreicht, andererseits kann die Geometrie des aus der Düse austretenden Arbeitsmedienstroms auf einfache Weise auf die Geometrie eines Laufrads einer Turbine bzw. dessen Turbinenschaufeln ausgerichtet werden.

Eine besonders einfache Verstellbarkeit der Lavaldüse ergibt sich nach einem Ausführungsbeispiel, bei dem jeweils eine der beiden zweiten Strömungskanalwände an einem der beiden Düsenkörper angeordnet ist, wobei die Düsenkörper mit den zweiten Strömungskanalwänden relativ zueinander verstellbar sind. Die zweiten Strömungskanalwände können dabei in fertigungstechnisch vorteilhafter Weise an den jeweiligen Düsenkörpern angeformt sein, d.h. einstückig mit diesen ausgebildet sein.

Damit der Arbeitsmedienstrom den Strömungskanal möglichst verlustfrei passieren kann, liegen die zweiten Strömungskanalwände an der Oberfläche des einen Düsenkörpers vorteilhafter Weise strömungsdicht an. Das dadurch erreichte gegenseitige Abstützen der Düsenkörper über die Strömungskanalwände ist zudem für die Stabilität der Lavaldüse bzw. eine präzise Verstellfunktion der Lavaldüse günstig.

Das Risiko von Spaltverlusten, das sich insbesondere auch aus fertigungstechnischen Toleranzen bzw. unterschiedlichen Temperaturgängen der Bauteile ergeben kann, wird nach einer Ausführungsform der Erfindung dadurch weiter verringert, dass die zweiten Strömungskanalwände der Oberfläche des einen Düsenkörpers unter einer, vorzugsweise elastischen, Vorspannung anliegen. Bei zylindrisch ausgebildeten Düsenkörpern kann dies beispielsweise über eine entsprechende Bemaßung der zweiten Strömungskanalwände im Verhältnis zu dem Innen- bzw. Außendurchmesser der Düsenkörper erreicht werden. Die Lavaldüse kann diesbezüglich auch wenigstens einen Federkörper aufweisen, durch den beispielsweise zumindest ein zylindrischer Düsenkörper mit einer in radialer Richtung wirkenden Kraft beaufschlagt ist.

Zwecks einer weiter optimierten Abdichtung im Bereich der gegenseitigen Kontaktflächen der Düsenkörper und der zweiten Strömungskanalwände sowie eines weiter reduzierten Reibwiderstands kann den zweiten Strömungskanalwänden und den Düsenkörpern wenigstens ein, vorzugsweise linienförmiges, Dichtelement zwischengeschaltet sein, das einen geringen Reibwiderstand aufweist. Das Dichtelement kann zum Beispiel aus einem Kunststoff, wie etwa PTFE, oder aus einem keramischen Werkstoff gefertigt sein und/oder als Beschichtung ausgeführt sein.

Für eine möglichst einfache, verschleißarme und zugleich verzögerungsarme Verstellung des Strömungsquerschnitts des Strömungskanals weisen die einander zugewandten Oberflächen der beiden Düsenkörper und/oder der zweiten Strömungskanalwände vorzugsweise an ihren gegenseitigen Anlageflächen einen geringen Reibwiderstand auf. Dies kann zum Beispiel durch eine Oberflächenbehandlung, etwa Nitrieren und/oder eine geeignete Beschichtung, erreicht werden.

Mit der Verstellung des Strömungsquerschnitts der Lavaldüse soll insbesondere der kritische (geringste) Strömungsquerschnitt der Lavaldüse verändert werden. Gleichzeitig soll aber das Verhältnis der durchströmbaren Fläche im Bereich dieses kritischen Strömungsquerschnitts zur durchströmbaren Fläche im Bereich eines maximalen Austrittsquerschnitts der Düse (Diffusor) unverändert bleiben, um sicherzustellen, dass sich mit der Düsenverstellung nicht die Austrittsmachzahl aus der Düse und damit das Auslegungs-Druckverhältnis über die Turbine ändern. Um diese Forderung zu erfüllen, wird der divergierende Strömungsquerschnitt des Strömungskanals stromabwärts des kritischen Strömungsquerschnitts, d.h. im Bereich des Düsenauslasses, vorzugsweise nicht über die Konturierung der zweiten Strömungskanalwände realisiert, sondern über die von den einander zugewandten Oberflächen der Düsenkörper gebildeten ersten Strömungskanalwände. Diese weisen daher vorzugsweise längs des Strömungskanals eine feste Lavalkontur auf. Die zweiten Strömungskanalwände konvergieren dabei vorzugsweise längs des Strömungskanals bis zu dessen engsten Strömungsquerschnitt gegeneinander und verlaufen stromabwärts des engsten Strömungsquerschnitts zueinander parallel.

Der mit der erfindungsgemäßen Düsenanordnung verbundene Vorteil besteht abgesehen von den vorstehend erläuterten Vorteilen der erfindungsgemäßen Lavaldüse im Wesentlichen darin, dass die Strömungsquerschnitte der Lavaldüse in Abhängigkeit von einem veränderlichen Massenstrom eines Arbeitsmediums synchron angesteuert bzw. verstellt werden können.

Der mit der erfindungsgemäßen Axialturbine verbundene Vorteil besteht im Wesentlichen darin, dass diese in Abhängigkeit von einem zur Verfügung stehenden Massenstrom des Arbeitsmediums effizient betrieben werden kann.

Weitere Vorteile und vorteilhafte Ausgestaltungen des Gegenstands der Erfindung sind der Beschreibung, der Zeichnung und den Ansprüchen entnehmbar.

### Zeichnungen

Nachstehend wird die Erfindung anhand eines in der Zeichnung stark schematisiert wiedergegebenen Ausführungsbeispiels näher erläutert.

Es zeigen:
- Fig. 1: einen schematisierten Querschnitt einer erfindungsgemäßen Lavaldüse;
- Fig. 2: eine perspektivische Ansicht der in der Fig. 1 dargestellten Lavaldüse mit entferntem äußerem Düsenkörper;
- Fig. 3: eine weitere perspektivische Ansicht der in der Fig. 1 dargestellten Lavaldüse;
- Fig. 4: eine stirnseitige Ansicht einer Düsenanordnung mit zwei Lavaldüsen;
- Fig. 5: eine perspektivische Ansicht einer ausschnittsweise dargestellten Axialturbine mit einer Lavaldüse; und
- Fig. 6: eine zu der Fig. 5 ähnliche Axialturbine mit einer Lavaldüse, bei der der äußere Düsenkörper entfernt ist.

### Beschreibung der Ausführungsbeispiele

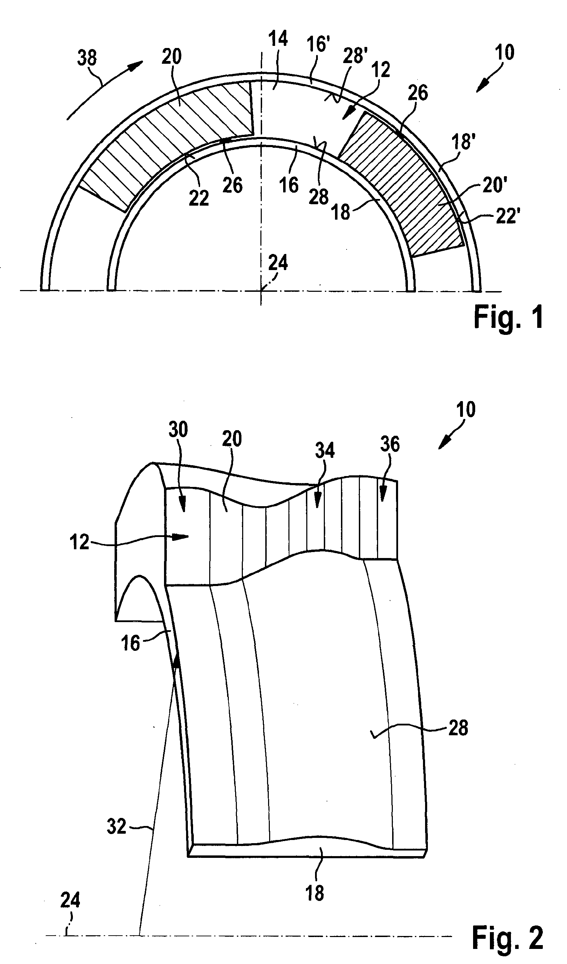

In der **Fig. 1** ist eine insgesamt mit **10** bezeichnete Lavaldüse stark schematisiert wiedergegeben, die einen Strömungskanal **12** mit einem im Wesentlichen rechteckigen Strömungsquerschnitt **14** aufweist, der längs des Strömungskanals 12 einen insgesamt konvergent-divergent Verlauf aufweist.

Der Strömungskanal 12 weist einander gegenüberliegende erste Strömungskanalwände **16, 16'** auf, die von zwei zueinander fest beabstandeten zylindrischen Düsenkörpern **18, 18'** gebildet sind, die koaxial und ineinander angeordnet sind.

Der Strömungskanal 12 ist in Umfangsrichtung der Düsenkörper 18, 18'durch zwei einander gegenüberliegend angeordnete zweite Strömungskanalwände **20, 20'** begrenzt, die jeweils zwischen den beiden Düsenkörpern 18, 18' angeordnet sind.

Die zweiten Strömungskanalwände 20, 20' sind jeweils von einem der beiden Düsenkörper 18, 18' ausgebildet und so bemessen, dass sie dem jeweilig anderen Düsenkörper 18, 18' mit ihrer dem jeweilig anderen Düsenkörper 18; 18' zugewandten Gleitfläche **22, 22'** jeweils unter einer elastischen Vorspannung formschlüssig und strömungsdicht anliegen.

Der in der Fig. 1 dargestellte äußere zylindrische Düsenkörper 18' kann mittels einer in der Zeichnung nicht näher wiedergegebenen Verstelleinrichtung gegenüber dem in der Figur dargestellten kleineren Düsenkörper 18 um ihre gemeinsame Achse **24** verdreht werden. Hierdurch kann die in der Fig. 1 links dargestellte zweite Strömungskanalwand 20 auf die andere zweite Strömungskanalwand 20' zu bzw. von dieser weg bewegt werden.

Die Düsenkörper 18, 18' und die Gleitflächen 22, 22' der zweiten Strömungskanalwände 20, 20' weisen einen geringen Reibwiderstand auf, wobei zwischen den beiden Düsenkörpern 18, 18' und den zweiten Strömungskanalwänden 20, 20' zusätzlich ein linienförmiges elastisches Dichtelement 26 aus PTFE angeordnet ist. Das Dichtelement **26** weist seinerseits ebenfalls einen geringen Reibwiderstand auf und ist auf die während des Betriebs der Lavaldüse 10 auftretenden thermischen Belastungen ausgerichtet. Das Dichtelement 26 kann alternativ auch aus einem keramischen, einem metallischen oder einem Verbundwerkstoff gefertigt sein bzw. als entsprechende Beschichtung der Düsenkörper 18, 18' und/oder der Gleitflächen 22, 22' der zweiten Strömungskanalwände 20, 20' ausgeführt sein.

Die einander zugewandten Oberflächen **28, 28'** (Mantelflächen) der beiden zylindrischen Düsenkörper 18, 18' weisen längs des Strömungskanals 12 eine feste Lavalkontur auf, wie dies beispielhaft anhand der perspektivischen Darstellung des in der **Fig. 2** wiedergegebenen kleineren zylindrischen Düsenkörpers 18 verdeutlicht ist. Im Bereich eines Düseneinlasses **30** der Lavaldüse 10 weist der zylindrische Düsenkörper 18 zunächst einen längs des Strömungskanals 12 rampenförmig zunehmenden Außenradius **32** auf, der im Bereich eines kritischen Strömungsquerschnitts **34** der Lavaldüse 10 ein Maximum erreicht und sich stromabwärts des kritischen Strömungsquerschnitts 34 im Bereich eines Düsenauslasses **36** (Diffusor) erneut verjüngt.

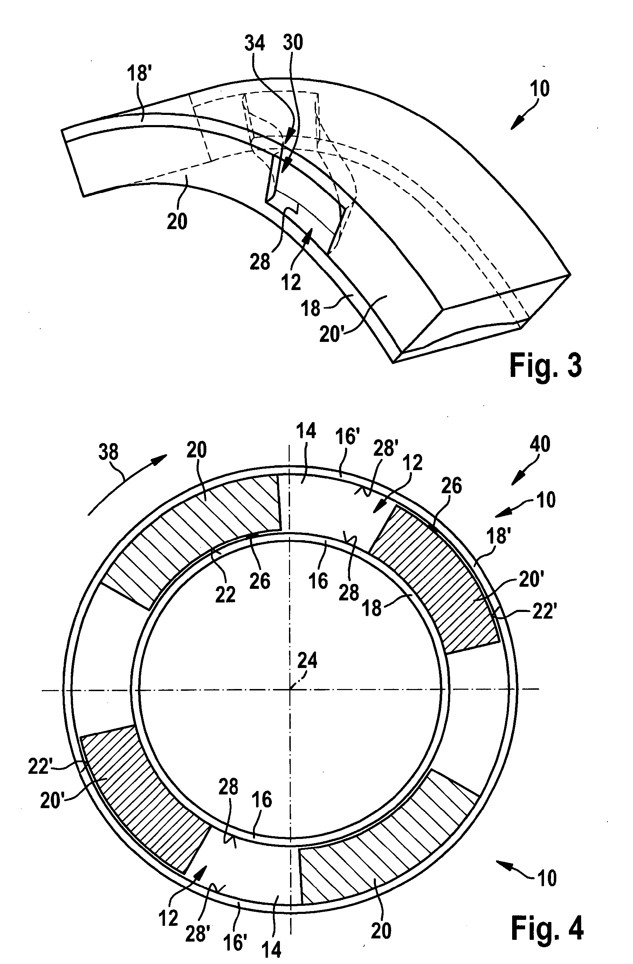

Wie insbesondere aus der **Fig. 3** hervorgeht, konvergieren auch die beiden zweiten Strömungskanalwände 20, 20' ausgehend vom Bereich des Düseneinlasses 30 bis zum kritischen Strömungsquerschnitt 34 des Strömungskanals 12 gegeneinander, verlaufen jedoch stromabwärts des kritischen Strömungsquerschnitts 34 zueinander parallel.

Wie in der Fig. 1 gezeigt, wird die zweite Strömungskanalwand 20durch Verdrehen des Düsenkörpers 18' gegenüber dem Düsenkörper 18 in Richtung des in der Figur mit **38** bezeichneten Pfeils in Umfangsrichtung der Düsenkörper 18, 18' auf die andere zweite Strömungskanalwand 20'zubewegt. Dadurch verringert sich der Strömungsquerschnitt 14 entlang des Strömungskanals 12. Da die zweiten Strömungskanalwände 20, 20' im Bereich des Düsenauslasses 36 zueinander im Wesentlichen parallel angeordnet sind, bleibt das Verhältnis des minimalen (kritischen) Strömungsquerschnitts 34 zu einem maximalen Strömungsquerschnitt des Düsenauslasses 36 für jede Dreheinstellung der Lavaldüse bzw. des Strömungsquerschnitts 14 des Strömungskanals 10 konstant. Wie vorstehend erläutert, ist dabei die im Bereich des Düsenauslasses 36 für die Beschleunigung eines Arbeitsmediums erforderliche Vergrößerung der Strömungsquerschnittsfläche lediglich durch die Oberflächenkonturierung der ersten Strömungskanalwände bzw. der einander zugewandten Oberflächen 28, 28' der beiden Düsenkörper 18, 18' bedingt.

In der **Fig. 4** ist eine erfindungsgemäße Lavaldüsenanordnung **40** mit insgesamt zwei Lavaldüsen 10 gezeigt, die im Wesentlichen in der vorstehend erläuterten Weise ausgebildet sind. Die Strömungskanäle 12 der Lavaldüsen 10 weisen jeweils zwei einander gegenüberliegend angeordnete erste Strömungskanalwände 16, 16' auf, die jeweils von denselben koaxial und ineinander angeordneten zylindrischen Düsenkörpern 18, 18' gebildet sind. Der äußere zylindrische Düsenkörper 18' ist um die gemeinsame Achse 24 der Düsenkörper 18, 18' verstellbar bzw. verdrehbar, so dass von dem Düsenkörper 18' gebildete zweite Strömungskanalwände 20 in Richtung auf auf von dem Düsenkörper 18 gebildete zweite Strömungskanalwände 20' bzw. fort von diesen bewegbar sind. Dadurch sind die Strömungskanäle 12 bzw. die Strömungsquerschnitte 14 der beiden Lavaldüsen 10 der Lavaldüsenanordnung 40 synchron ansteuerbar bzw. verstellbar.

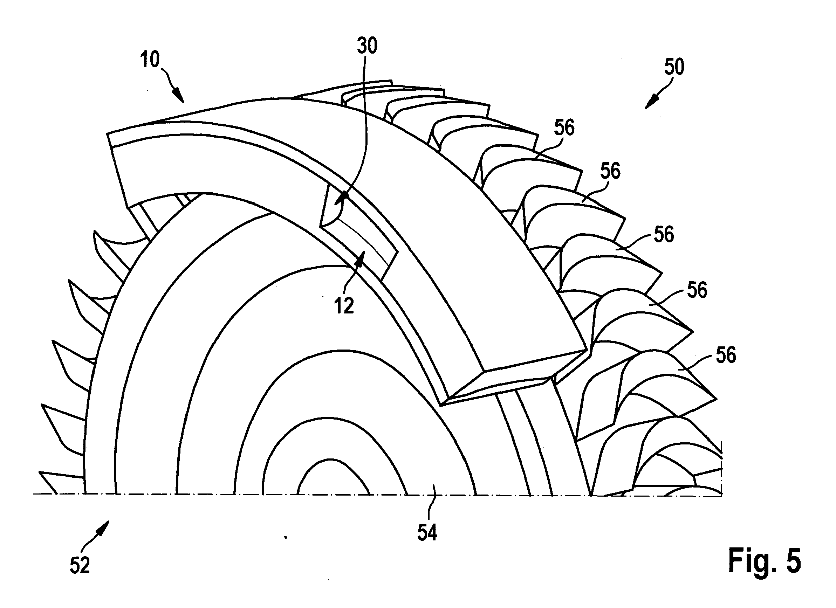

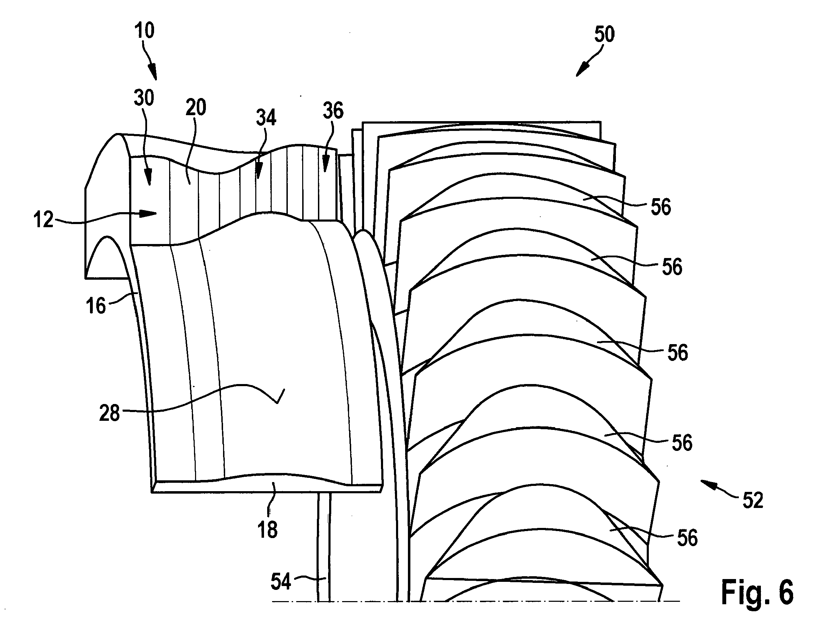

In den **Fign. 5** **und** **6** ist eine für den Gleichdruckbetrieb ausgelegte Axialturbine **50** gezeigt, die eine Lavaldüse 10 aufweist, welche in ihrem Aufbau im Wesentlichen der in den Fign. 1 bis 3 erläuterten Lavaldüse entspricht

Die Axialturbine 50 dient der Umwandlung kinetischer Energie eines beispielsweise durch den Abgasstrom einer Verbrennungskraftmaschine erhitzten und durch die Lavaldüse 10 beschleunigten fluiden Arbeitsmediums in Rotationsenergie und weist in herkömmlicher Weise ein bewegbares Laufrad **52** mit einer Laufradscheibe 54 und einer Vielzahl von umfangsseitig an der Laufradscheibe **54** angeordneten Turbinenschaufeln **56** auf.

Der Strömungskanal 12 der Lavaldüse verläuft abschnittsweise quer zu ihrer Längsachse, wodurch das Arbeitsmedium bei Austritt aus der Lavaldüse 10 in einem optimalen Anströmwinkel auf die Turbinenschaufeln 56 der Axialturbine leitbar ist. Die Lavaldüse ist der Axialturbine unmittelbar angrenzend sowie stufenfrei vorgeschaltet, um Spaltverluste sowie Verwirbelungen des Arbeitsmediums zu minimieren.

Die Axialturbine 50 kann nach einem in der Zeichnung nicht wiedergegebenen alternativen Ausführungsbeispiel auch eine Düsenanordnung, wie diese vorstehend erläutert wurde, aufweisen.

## Patentansprüche

1. Lavaldüse (10) mit einem Strömungskanal (12), der einen konvergent-divergent verlaufenden Strömungsquerschnittsverlauf (14) aufweist, wobei der Strömungskanal (12) einander gegenüberliegende erste Strömungskanalwände (16, 16') aufweist, die von zwei zylindrisch ausgebildeten Düsenkörpern (18,18`) gebildet sind, welche koaxial und ineinander angeordnet und zueinander fest beabstandet sind und längs des Strömungskanals (12) eine feste Lavalkontur aufweisen, wobei zwischen den Düsenkörpern (18, 18') zwei einander gegenüberliegend angeordnete zweite Strömungskanalwände (20, 20') angeordnet sind, **dadurch gekennzeichnet, dass** diezweiten Strömungskanalwände (20, 20') zur Verstellung des Strömungsquerschnitts (14) des Strömungskanals (12) relativ zueinander aufeinander zu bzw. voneinander weg bewegbar sind

2. Lavaldüse nach Anspruch 1 , **dadurch gekennzeichnet, dass** jeweils eine der beiden zweiten Strömungskanalwände (20, 20') an einem der beiden Düsenkörper (18, 18') angeordnet, vorzugsweise angeformt, ist, wobei die Düsenkörper (18, 18') mit den zweiten Strömungskanalwänden (20, 20') relativ zueinander verstellbar sind.

3. Lavaldüse nach einem der vorhergehenden Ansprüche, **dadurch gekennzeichnet, dass** die zweiten Strömungskanalwände (20, 20') dem jeweils anderen Düsenkörper (18, 18'), vorzugsweise unter einer elastischen Vorspannung, strömungsdicht anliegen.

4. Lavaldüse nach einem der vorhergehenden Ansprüche, **dadurch gekennzeichnet, dass** die beiden Düsenkörper (18, 18') und/oder die zweiten Strömungskanalwände (20, 20') an ihren gegenseitigen Anlageflächen einen geringen Reibwiderstand aufweisen.

5. Lavaldüse nach einem der vorhergehenden Ansprüche, **dadurch gekennzeichnet, dass** den beiden Düsenkörpern (18, 18') und den zweiten Strömungskanalwänden (20, 20') jeweils wenigstens ein, vorzugsweise linienförmiges, Dichtelement (26) zwischengeschaltet ist, das einen geringen Reibwiderstand aufweist.

6. Lavaldüse nach Anspruch 5, **dadurch gekennzeichnet, dass** die zweiten Strömungskanalwände (20, 20') stromabwärts des kritischen, d.h. des engsten, Strömungsquerschnitts (34) zueinander parallel verlaufen.

7. Düsenanordnung (40), mit wenigstens zwei Lavaldüsen (10) nach einem der Ansprüche 1 bis 6, wobei die Strömungskanäle (12) der Lavaldüsen (10) jeweils zwei einander gegenüberliegend angeordnete erste Strömungskanalwände (16, 16') aufweisen, die jeweils von denselben zylindrischen Düsenkörpern (18, 18') gebildet sind, die koaxial und ineinander angeordneter sind.

8. Axialturbine (50) mit einer Lavaldüse (10) nach einem der Ansprüche 1 bis 6 oder mit einer Düsenanordnung (40) nach Anspruch 7.

## Claims

1. Laval nozzle (10) having a flow channel (12), which has a flow cross-sectional profile (14) extending in a convergent-divergent manner, the flow channel (12) having mutually opposing first flow channel walls (16, 16'), which are formed by two cylindrically formed nozzle bodies (18, 18'), which are arranged coaxially and one inside the other and are spaced a fixed distance apart from one another and have along the flow channel (12) a fixed Laval contour, two second flow channel walls (20, 20') arranged in a mutually opposing manner being arranged between the nozzle bodies (18, 18'), **characterized in that** the second flow channel walls (20, 20') can be moved in relation to one another, towards one another or away from one another, for adjusting the flow cross section (14) of the flow channel (12).

2. Laval nozzle according to Claim 1, **characterized in that** one of the two second flow channel walls (20, 20') is respectively arranged, preferably integrally formed, on one of the two nozzle bodies (18, 18'), the nozzle bodies (18, 18') being adjustable with the second flow channel walls (20, 20') in relation to one another.

3. Laval nozzle according to one of the preceding claims, **characterized in that** the second flow channel walls (20, 20') lie against the other nozzle body (18, 18') respectively with flow-preventing contact, preferably under an elastic pretension.

4. Laval nozzle according to one of the preceding claims, **characterized in that** the two nozzle bodies (18, 18') and/or the second flow channel walls (20, 20') have a low frictional resistance at their surfaces of mutual contact.

5. Laval nozzle according to one of the preceding claims, **characterized in that** at least one, preferably linear, sealing element (26), which has a low frictional resistance, is respectively interposed between the two nozzle bodies (18, 18') and the second flow channel walls (20, 20').

6. Laval nozzle according to Claim 5, **characterized in that** the second flow channel walls (20, 20') extend parallel to one another downstream of the critical, i.e. narrowest, flow cross section (34).

7. Nozzle arrangement (40), having at least two Laval nozzles (10) according to one of Claims 1 to 6, the flow channels (12) of the Laval nozzles (10) respectively having two first flow channel walls (16, 16'), which are arranged in a mutually opposing manner and are respectively formed by the same cylindrical nozzle bodies (18, 18'), which are arranged coaxially and one inside the other.

8. Axial-flow turbine (50) having a Laval nozzle (10) according to one of Claims 1 to 6 or having a nozzle arrangement (40) according to Claim 7.

## Revendications

1. Tuyère Laval (10) dotée d'un canal d'écoulement (12) qui présente une section transversale d'écoulement (14) qui s'étend en convergeant et en divergeant,
le canal d'écoulement (12) présentant des premières parois (16, 16') de canal d'écoulement situées l'une en face de l'autre et formées par deux corps de tuyère (18, 18') de configuration cylindrique disposés coaxialement l'un dans l'autre et maintenus fixement à distance l'un de l'autre, et un premier contour Laval fixe le long du canal d'écoulement (12), deux deuxièmes parois (20, 20') de canal d'écoulement étant disposées l'une en face de l'autre entre les corps de tuyères (18, 18'),
**caractérisée en ce que**
les deuxièmes parois (20, 20') du canal d'écoulement peuvent être rapprochées l'une de l'autre ou éloignées l'une de l'autre pour ajuster la section transversale d'écoulement (14) du canal d'écoulement (12).

2. Tuyère Laval selon la revendication 1, **caractérisée en ce que** l'une des deux parois (20, 20') du canal d'écoulement sont disposées respectivement sur l'un des deux corps de tuyère (18, 18') et de préférence y sont formées, les corps de tuyère (18, 18') pouvant être ajustés l'un par rapport à l'autre par les deuxièmes parois (20, 20') du canal d'écoulement.

3. Tuyère Laval selon l'une des revendications précédentes, **caractérisée en ce que** les deuxièmes parois (20, 20') du canal d'écoulement reposent de manière étanche à l'écoulement sur l'autre corps de tuyère (18, 18'), de préférence sous précontrainte élastique.

4. Tuyère Laval selon l'une des revendications précédentes, **caractérisée en ce que** les deux corps de tuyère (18, 18') et/ou les deuxièmes parois (20, 20') du canal d'écoulement présentent une faible résistance au frottement sur leurs surfaces en contact mutuel.

5. Tuyère Laval selon l'une des revendications précédentes, **caractérisée en ce qu'**au moins un élément d'étanchéité (26), de préférence de forme linéaire, qui présente une faible résistance au frottement, est interposé entre les deux corps de tuyère (18, 18') et les deuxièmes parois (20, 20') du canal d'écoulement.

6. Tuyère Laval selon la revendication 5, **caractérisé en ce que** les deuxièmes parois (20, 20') du canal d'écoulement s'étendent parallèlement l'une à l'autre en aval de la section transversale critique d'écoulement (34), c'est-à-dire la section transversale d'écoulement la plus étroite.

7. Ensemble de tuyère (40) doté d'au moins deux tuyères Laval (10) selon l'une des revendications 1 à 6, dans lequel les canaux d'écoulement (12) des tuyères Laval (10) présentent tous deux deux premières parois (16, 16') de canal d'écoulement disposées en face l'une de l'autre et formées chacune des mêmes corps cylindriques de tuyère (18, 18') disposés coaxialement et l'un dans l'autre.

8. Turbine axiale (50) dotée d'une tuyère Laval (10) selon l'une des revendications 1 à 6 ou d'un ensemble de tuyère (40) selon la revendication 7.
